# EUROPÄISCHE PATENTSCHRIFT

(11) **EP 2 872 379 B1**
(45) Veröffentlichungstag und Bekanntmachung des Hinweises auf die Patenterteilung: **06.09.2017**
(21) Anmeldenummer: 13752817.0
(22) Anmeldetag: 12.07.2013
(51) Int. Cl.: E01C 19/00

(54) **WALZENZUG MIT KNICKGELENKANORDNUNG**
ROAD ROLLING VEHICLE WITH AN ARTICULATED JOINT
COMPACTEUR ROUTIER AVEC DISPOSITIF D'ARTICULATION

(30) Priorität: 13.07.2012 DE 102012014001
(43) Veröffentlichungstag der Anmeldung: 20.05.2015
(73) Patentinhaber: BOMAG GmbH, 56154 Boppard (DE)
(72) Erfinder: HAUBRICH, Thomas, 56290 Gödenroth (DE); KLEIN, Thomas, 56653 Wehr (DE); JAKOBS, Stefan, 56283 Gondershausen (DE)
(74) Vertreter: Heidler, Philipp
(86) Internationale Anmeldenummer: PCT/EP2013/002081
(87) Internationale Veröffentlichungsnummer: WO 2014/009023

(56) Entgegenhaltungen:
- FR-A- 1 418 013
- JP-A- S6 181 279

## Beschreibung

Die Erfindung betrifft einen Walzenzug gemäß dem Oberbegriff des Anspruchs 1 mit einer Gelenkanordnung, mit einem vorderen Anschlusselement, zum Anschluss eines vorderen Rahmenteils des Walzenzuges, einem hinteren Anschlusselement, zum Anschluss eines hinteren Rahmenteils des Walzenzuges, einem Knickgelenk, über das das vordere Anschlusselement und das hintere Anschlusselement relativ zueinander zur Durchführung einer Lenkbewegung zwischen dem vorderen Rahmenteil und dem hinteren Rahmenteil um eine Lenkachse verschwenkbar sind, und wenigstens einem Pendelgelenk, über das das vordere Anschlusselement und das hintere Anschlusselement relativ zueinander zur Durchführung einer Pendelbewegung zwischen dem vorderen Rahmenteil und dem hinteren Rahmenteil um eine Pendelachse tordierbar sind.

Das Prinzip der Knicklenkung hat bei Fahrzeugen und insbesondere selbstfahrenden Baumaschinen, wie beispielsweise Radladern, Transportern, Vibrationswalzen oder ähnlichen Baumaschinen, dazu geführt, dass kostengünstig aufgebaute Fahrwerke, die in der Regel starre Antriebsachsen aufweisen, mit einer wesentlich verbesserten Wendigkeit ausgestattet wurden. Diese Wendigkeit ergibt sich durch die Rahmenteilung. Während die Vorderachse üblicherweise mit dem vorderen Rahmenteil verbunden ist, sorgt die Kombination aus Knickgelenk und Pendelgelenk, im Folgenden mitunter auch als Knick-Pendelgelenk bezeichnet, für dauernden Bodenkontakt sowohl der Vorder- als auch einer Hinterachse, die am hinteren Rahmenteil aufgehängt ist.

Bei den knickgelenkten Fahrzeugen und insbesondere knick-pendelgelenkten Fahrzeugen werden das vordere Rahmenteil und das hintere Rahmenteil über ein fest angeordnetes Knick-/Pendelgelenk miteinander verbunden. Somit ist ein derartiges Fahrzeug um eine im Wesentlichen senkrecht zur Bodenoberfläche verlaufende Knick- bzw. Lenkachse lenkbar, wobei eine relative Verschwenkung des vorderen Rahmenteils gegenüber dem hinteren Rahmenteil um eine durch das Knickgelenk verlaufende Lenkachse möglich ist. Um insbesondere bei starren Achsen einen verbesserten Bodenkontakt, insbesondere bei sehr unebenen Fahrbahnoberflächen zu erhalten, wird, wie bereits beschrieben, das Knickgelenk meist mit einem Pendelgelenk kombiniert, sodass eine Torsionsbewegung des vorderen Rahmenteils relativ zum hinteren Rahmenteil wen igstens innerhalb eines begrenzten Winkels möglich ist. Ein derartiges Gelenk ist beispielsweise in der gattungsgemäßen EP 1111134 A2 und in der JP S61 081279 A beschrieben.

Zwar sind solche knickgelenkten Fahrzeuge und insbesondere Fahrzeuge mit einem Knick-Pendelgelenk sehr zuverlässig. Allerdings wird durch die Kombination des Knick-/ Pendelgelenks ein entsprechend großer Freiraum benötigt, um Kollisionen zwischen vorderem und hinterem Rahmenteil bei vollem Lenk- und Pendelanschlag zu vermeiden.

Nachteilig bei solchen Fahrzeugen ist ihre Kippstabilität, insbesondere im eingelenkten Zustand. Darüber hinaus kann es auf Grund der Achsteilung unter Umständen zu einem unruhigen Geradeauslauf der Maschine kommen.

Ein weiterer Nachteil liegt darin, dass es aufgrund der sehr engen Wenderadien auf den außenseitigen Rädern zu sehr hohen Belastungen kommt, die mitunter zu Fahrbahnbeschädigungen als auch zu hohen Materialbelastungen führen.

Aus EP 1111134 A2 ist eine Straßenwalze mit einem Knick-Pendelgelenk bekannt, bei welchem das Knickgelenk von einer gelenkig gelagerten Koppelstange überbrückt wird. Die Koppelstange bewirkt bei einem Lenkvorgang eine Neigung zwischen dem vorderen und hinteren Rahmenteil der Straßenwalze.

Ferner ist aus DE 1241719 B ein Radlader mit einem Knickgelenk bekannt, dessen Achse nach vorn geneigt ist. Ein Pendelausgleich erfolgt über die Hinterachse, welche um die Fahrzeuglängsachse pendelnd angeordnet ist.

DE202005021280 U1 beschreibt ein geländegängiges Fahrzeug in Form einer Erntemaschine mit einem Knickgelenk, das eine leicht nach vorn geneigte Drehachse aufweist. Die FR 1 418 013 A offenbart ein knickgelenktes Transportfahrzeug mit nach hinten geneigter Drehachse.

Aufgabe der Erfindung ist es, einen Walzenzug mit einer Gelenkanordnung anzubieten, der ein verbessertes Fahrverhalten bei gleichzeitiger Reduzierung der Maschinenbelastungen ermöglich und zudem noch eine kompaktere Gesamtbauweise zulässt.

Diese Aufgabe wird durch einen Walzenzug gemäß dem unabhängigen Anspruch gelöst.

Insbesondere wird diese Aufgabe mit einem Walzenzug mit einer Gelenkanordnung dadurch gelöst, dass die Lenkachse des Knickgelenkes um einen Winkel zur Pendelachse geneigt ist, und dass eine Begrenzung des Pendelwinkels in Abhängigkeit von der Neigung der Lenkachse und des Lenkwinkels vorhanden ist. Bevorzugt wird die Begrenzung durch einen Finger am vorderen Rahmenteil und einen Anschlag für den Finger auf dem Drehkörper bzw. dem Torsionslagerlement gebildet.

Der Walzenzug weist einen vorderen Rahmenteil und einen hinteren Rahmenteil auf, an denen Fahrmittel angeordnet sind.

Unter hinterem bzw. vorderem Anschlusselement wird hier jedes Bauteil verstanden, das der Kraftübertragung zwischen dem vorderen Rahmenteil bzw. hinteren Rahmenteil und der Gelenkanordnung dienen kann. Insofern sind also sowohl einstückige als auch mehrteilige Anschlusskonstruktionen denkbar.

Ein wesentliches Merkmal des erfindungsgemäßen Walzenzuges ist die um den Winkel α geneigte Anordnung der Lenkachse des Knickgelenkes der Gelenkanordnung relativ zur Pendelachse des Pendelgelenkes. Erfindungsgemäß wird die Lenkachse um einen spitzen Winkel α zur Pendelachse geneigt ausgebildet.

Bei einem Walzenzug der zuvor genannten Art, mit einem vorderen Rahmenteil und einem hinteren Rahmenteil, ergibt sich so insbesondere eine Neigung der Lenkachse des Knickgelenkes um den spitzen Winkel α zur Horizontalen des Walzenzugs und somit auch im Wesentlichen zur Bodenoberfläche, auf der der Walzenzug bewegt wird.

Wie im Folgenden noch erläutert wird, führt eine solche geneigte Anordnung der Lenkachse des Knickgelenkes zu einer Verbesserung der Kippstabilität des Walzenzugs, da bauartbedingt eine Kraftresultierende der Bewegung eines eventuell kippenden Fahrzeuges entgegenwirkt. Die resultierende Stabilisierungsfunktion resultiert direkt aus der bauartbedingten Neigung der Pendelachse während des Lenkvorganges, da sich diese Achse während des Lenkvorganges nicht innerhalb ihrer Ebene, sondern auf einer kurvenförmigen Bahn bewegt.

Aufgrund der geneigten Lenkachse des Knickgelenkes verbessert sich darüber hinaus der Geradeauslauf des Walzenzugs, da aufgrund der Achsneigung während der Lenkbewegung eine Anhebung des Maschinenschwerpunktes erfolgt. Die daraus resultierende Rückstellkraft verbessert den Geradeauslauf, wobei trotzdem die Vorteile eines knickgelenkten Rahmens und insbesondere dessen Wendigkeit erhalten bleiben.

Die geometrisch bedingte Rückstellkraft hat darüber hinaus Auswirkung auf die Lastverteilung, insbesondere auf die Außenräder der jeweiligen Rahmenteile 4, 8, da durch die Neigung der Pendelachse während des Lenkvorganges immer das kurvenäußere Rad entlastet wird. Im Zusammenspiel mit wirkenden Kurvenkräften führt dies zu einer sehr viel gleichmäßigeren Materialbelastung des Walzenzugs.

Als besonders vorteilhaft hat sich für den Neigungswinkel α ein Winkel zwischen 65 ° und 85 ° und insbesondere 80 ° herausgestellt, da hier ein optimales Zusammenspiel zwischen Pendelbegrenzung und möglichem Lenkwinkel erreicht wird.

Grundsätzlich kann die Lenkachse in Richtung des vorderen Anschlusselements geneigt sein. Vorzugsweise ist die Lenkachse aber in Richtung des hinteren Anschlusselementes geneigt, da gerade durch diese geometrische Ausgestaltung die obigen Effekte bei einem Betrieb des Walzenzugs in seiner Hauptfertigungs- bzw. Transportrichtung verstärkt zum Tragen kommen.

Bei einer besonderen Ausführungsform weisen das hintere Anschlusselement ein Jochelement mit wenigstens zwei voneinander beabstandeten Lagerelementen und das vordere Anschlusselement wenigstens einen Lagerschaft mit wenigstens zwei zu diesen Lagerelementen komplementären Lagergegenelementen auf, die mit den Lagerelementen in kraftschlüssiger Wirkverbindung stehen oder umgekehrt. Umgekehrt bedeutet hier, dass auch das vordere Anschlusselement ein Jochelement mit wenigstens zwei voneinander beabstandeten Lagerelementen und das hintere Anschlusselement wenigstens einen Lagerschaft mit wenigstens zwei zu diesen Lagerelementen komplementären Lagergegenelementen aufweisen können. Zudem bedeutet umgekehrt, dass auch die Lagerelemente bzw. die Lagergegenelemente an den jeweils anderen genannten Bauteilen ausgebildet sein können. Durch das Jochelement wird folglich eine Achse definiert, die die Lenkachse des Knickgelenkes definiert.

Vorzugsweise verläuft die geneigte Lenkachse durch die Lagergegenelemente.

Zur Ausbildung insbesondere des Knickgelenkes weist bevorzugt wenigstens ein Lagergegenelement einen Kugelkopf oder dergleichen Fortsatz und das Lagerelement eine komplementäre Kugelkopfaufnahme oder dergleichen Fortsatzaufnahme auf, oder umgekehrt. Wie auch schon zuvor erwähnt bedeutet umgekehrt, dass der Kugelkopf natürlich auch am Lagerelement und die Kugelkopfaufnahme am Lagergegenelement ausgebildet sein können. Eine solche Kugelkopfausbildung erlaubt eine verschleißfreie und insbesondere zwängungsfreie Ausführung der Gelenkanordnung, bei der insbesondere die auf das Pendelgelenk wirkenden Torsionskräfte schadfrei übertragen werden können.

Unter umgekehrt wird hier verstanden, dass natürlich das Jochelement auch am vorderen Anschlusselement und der Lagerschaft am hinteren Anschlusselement ausgebildet sein können.

Vorzugsweise ist in diesem Zusammenhang der Lagerschaft insbesondere parallel zur Lenkachse geneigt ausgebildet. Das bedeutet, dass also der Lagerschaft am vorderen bzw. hinteren Anschlusselement, je nach Ausführungsform, ebenfalls zur Pendelachse des Pendelgelenkes (im nicht eingelenkten Zustand) geneigt ausgebildet ist, wobei diese Neigung insbesondere parallel zur Neigung zur Lenkachse verläuft. Insofern bildet dann der Lagerschaft die Lenkachse, sodass die daran angeordneten Lagergegenelemente konzentrisch um die Lenkachse anzuordnen sind.

In einer besonderen Ausführungsform sind die Lagerelemente auf einem einstückig ausgebildeten Lagerschaft angeordnet. Ein solcher einstückiger Lagerschaft ist dann insbesondere parallel zur Lenkachse relativ zur Pendelachse geneigt angeordnet. Hier sind sowohl eine einstückige Anordnung des Lagerschaftes als auch eine mehrteilige Ausbildung eines solchen Lagerschaftes, der dann zu einem durchgehenden Bauteil zusammengefügt wird, möglich. Der Lagerschaft kann als separates Bauteil, welches mit einem der Rahmenteile verbunden ist, oder einstückig als integraler Bestandteil eines der Rahmenteile ausgebildet sein.

Bei einer anderen Ausführungsform erstrecken sich wenigstens zwei Lagerschäfte insbesondere senkrecht zur Pendelachse, die in Bezug auf eine Achse senkrecht zu dieser Pendelachse entlang der Pendelachse versetzt zueinander angeordnet sind. Bei der Anordnung von entsprechenden Lagerelementen bzw. Lagergegenelementen an diesen beiden versetzt zueinander angeordneten Lagerschäften ergibt sich dann eine durch die beiden Lagerelemente bzw. Lagergegenelemente geneigte Lenkachse für das Knickgelenk. Auf eine solche Weise kann eine sehr platzsparende Knickgelenkkonstruktion gewährleistet werden.

Die Lagerelemente des Jochelementes können in Abhängigkeit ihrer Einbausituation als ein oberes Lagerelement und ein unteres Lagerelement ausgebildet sein. Bei einer bevorzugten Ausführungsform ist dabei das untere Lagerelement in Bezug auf eine Achse senkrecht zur Pendelachse entlang der Pendelachse versetzt zum oberen Lagerelement angeordnet, oder umgekehrt. In Abhängigkeit der Hauptfertigungsrichtung des Walzenzuges sind dabei bevorzugt das untere Lagerelement in Richtung dieser Fertigungsrichtung nach vorne und das obere Lagerelement in Richtung dieser Fertigungsrichtung nach hinten versetzt. Auf diese Weise ergibt sich eine nach hinten geneigte Lenkachse des Knickgelenkes.

Es ist möglich, dass wenigstens der eine Lagerschaft an einem Torsionslagerelement angeordnet ist, das mit einem Torsionszapfen oder einem dergleichen Fortsatz rotierbar in eine Torsionszapfenaufnahme oder dergleichen Fortsatzaufnahme eingreift oder umgekehrt. Durch die Anordnung des wenigstens einen Lagerschaftes an einem solchen Torsionslagerelement ergibt sich eine sehr kompakte Gelenkanordnung mit Schwenk- und Pendelfunktion. Die Lagerschäfte können auf die zuvor genannte Art und Weise, als mehrteilig ausgebildete Lagerschäfte am Torsionslagerelement befestigt und insbesondere eingeschweißt oder einstückig gefertigt werden. Auch ist es möglich das Torsionslagerelement mit Bohrung zu versehen und einem einstückig ausgeführten Lagerschaft durch diese Bohrung durchzuführen, sodass sich freie Enden ergeben an denen dann die Lagerelemente bzw. Lagergegenelemente angeordnet werden können.

Bevorzugte Weiterbildungen der Erfindung sind in den abhängigen Ansprüchen beschrieben.

Im Folgenden wir die Erfindung anhand von Ausführungsbeispielen weiter beschrieben, die in den Zeichnungen dargestellt sind. Hierbei zeigen schematisch:
- Fig. 1: eine Seitenansicht einer Ausführungsform eines Walzenzugs mit erfindungsgemäßer Gelenkanordnung;
- Fig. 2: eine Vorderansicht des Walzenzugs aus Fig. 1;
- Fig. 3: die Ausführungsform aus Fig. 1 und 2 in eingelenktem Zustand;
- Fig. 4: eine Draufsicht auf den Walzenzug in eingelenktem Zustand gemäß Fig. 3;
- Fig. 5: einen theoretischen Betriebszustand eines Walzenzugs in eingelenktem Zustand gemäß Fig. 3 und 4;
- Fig. 6: eine Darstellung einer ersten Ausführungsform der Gelenkanordnung;
- Fig. 7: eine zweite Ausführungsform der Gelenkanordnung in einem Teilschnitt;
- Fig. 8: eine dritte Ausführungsform der Gelenkanordnung in einem Teilschnitt;
- Fig. 9: eine vierte Ausführungsform der Gelenkanordnung in einem Teilschnitt;
- Fig. 10: eine fünfte Ausführungsform der Gelenkanordnung in einem Teilschnitt;
- Fig. 11: eine Seitenansicht einer sechsten Ausführungsform der Gelenkanordnung bei Geradeausfahrt;
- Fig. 12: eine Seitenansicht der sechsten Ausführungsform in eingelenktem Zustand, und
- Fig. 13: eine geometrische Darstellung von relevanten Größen der Gelenkanordnung.

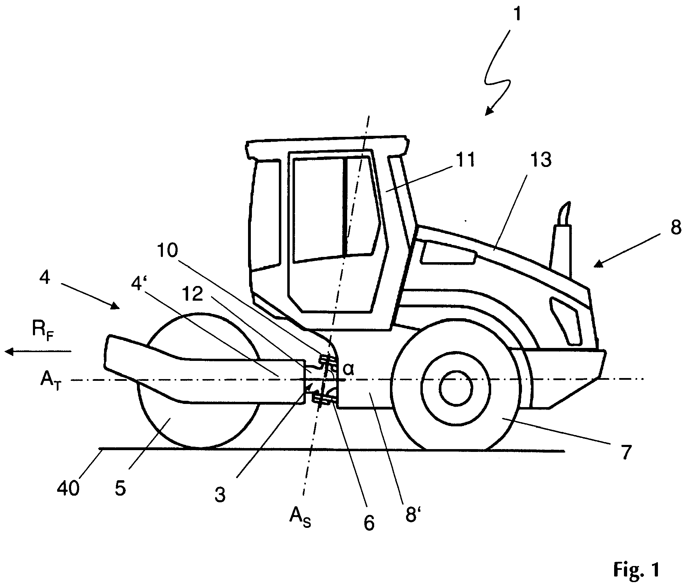

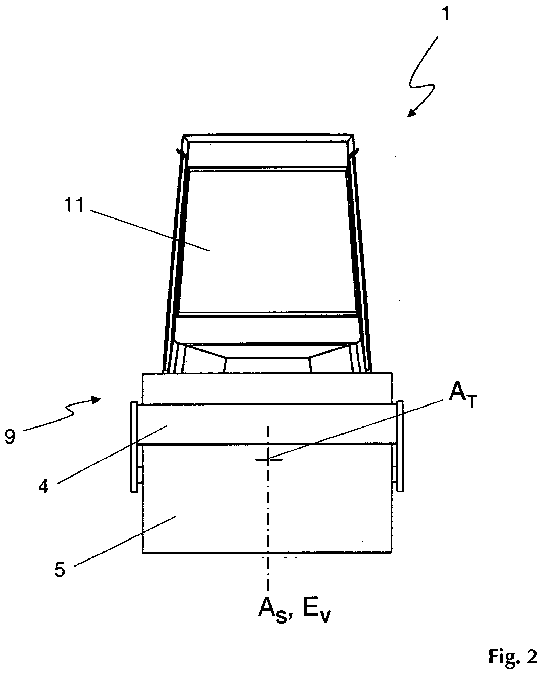

Die Fig. 1 und 2 zeigen ein Fahrzeug in Form einer Vibrationswalze 1, speziell einem Walzenzug, in einer nichteingelenkten Position, d.h. in Vorwärtsfahrtrichtung R_{F}. Der Walzenzug 1 weist einen geteilten Rahmen mit einem vorderen Rahmenteil 4 und einem hinteren Rahmenteil 8 auf, die über ein kombiniertes Knick-/ Pendelgelenk, das nachfolgend als Gelenkanordnung 3 bezeichnet wird, miteinander verbunden sind. Er hat ein Fahrwerk mit einer vorderseitigen Bandage 5 und luftbereiften Hinterrädern 7. Die Bandage 5 ist über einen Vorderradträger 4' am vorderen Rahmenteil 4 und die Hinterräder 7 sind an einem Hinterradträger 8' am hinteren Rahmenteil 8 angeordnet. Durch die Gelenkanordnung 3 zwischen dem vorderen Rahmenteil 4 und dem hinteren Rahmenteil 8 kann die Vibrationswalze 1 in einem sehr engen Wendekreis gefahren werden. Auf dem hinteren Rahmenteil 8 befinden sich eine Fahrerkabine 11 sowie ein Antriebsaggregat, das von einer Motorhaube 13 abgedeckt ist.

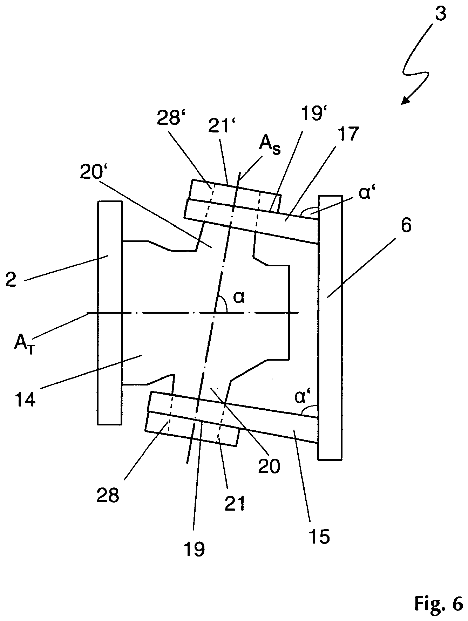

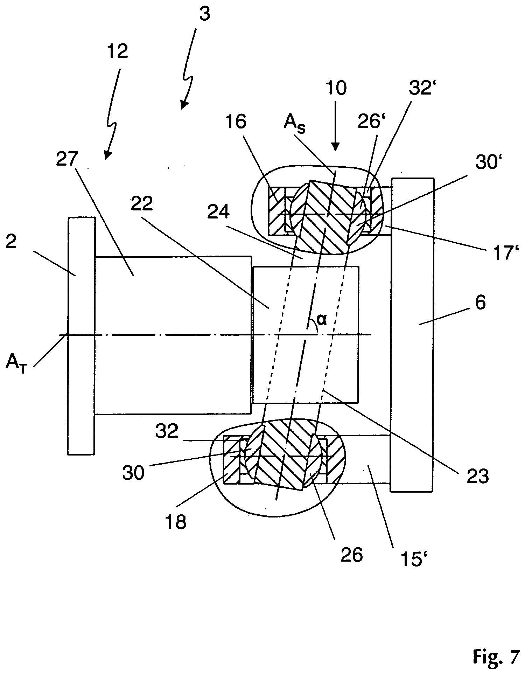

Zur Ausbildung dieser knickgelenkigen Kopplung weist die Gelenkanordnung 3 eine Hintereinanderschaltung eines Knickgelenks 10 und eine Pendelgelenks 12 auf. Die beiden Rahmenteile 4, 8 können somit eine Pendelbewegung und eine Schwenkbewegung relativ zueinander zur Durchführung eines Lenkvorganges des Walzenzugs 1 durchführen. Das Pendelgelenk 12 weist ein mit dem vorderem Rahmenteil 4 verbundenes vorderes Anschlusselement 2 (Fig. 6 bis 11) und das Knickgelenk 10 ein mit dem hinteren Rahmenteil 8 verbundenes hinteres Anschlusselement 6 (Fig. 6 bis 11) auf. Das vordere und das hintere Anschlusselement 2, 6 können als separates Bauteil oder integral mit dem vorderen bzw. hinteren Rahmenteil 4, 8 ausgebildet sein. Die kombinierte Pendel-/ Knicklenkung wird ferner dadurch gebildet, dass das Knickgelenk 10 und das Pendelgelenk 12 unmittelbar miteinander verbunden sind, indem das Pendelgelenk 12 einen Drehkörper 14 (Fig. 6) oder ein Torsionslagerelement 22 (Fig. 7 bis 11) aufweist, der bzw. das um die Pendelachse (A_{T}) drehbar am vorderen Anschlusselement (2) angeordnet ist, wobei das zum rahmenseitigen Gelenkteil des Knickgelenks 10 komplementäre Gelenkteil des Knickelements 10 am Drehkörper 14 bzw. am Torsionslagerelement 22 angeordnet ist.

Die Pendelbewegung erfolgt über eine Torsion der beiden Anschlusselemente 2, 6 (Fig. 6 bis 11) bzw. der vorderen und hinteren Rahmenteile 4, 8 relativ zueinander um eine Pendelachse A_{T}, die in Richtung der Längsachse des Walzenzugs 1 verläuft. In einer Stellung "Geradeausfahrt" der Gelenkanordnung 3 verläuft die Pendelachse A_{T} auch parallel zu einer planen Bodenoberfläche 40.

Eine Lenkbewegung, also das Verschwenken der beiden Rahmenteile 4, 8 relativ zueinander, erfolgt um eine Lenkachse A_{S}, die um einen spitzen Winkel α relativ zur Pendelachse A_{T} geneigt ist und sich mit der Pendelachse A_{T} schneidet. Die Lenkachse A_{S} liegt in der Lenkposition "Geradausfahrt" des Walzenzugs 1 ferner in der vertikalen Mittenebene E_{V} (Fig. 2) der Vibrationswalze 1. In der dargestellten bevorzugten Ausführung ist die Lenkachse A_{S} nach hinten geneigt. Nach hinten bedeutet hier entgegen Vorwärtsfahrtrichtung R_{F}, nämlich in Richtung der Hinterräder 7 bzw. einer Richtung, in welche der Walzenzug1 im Hauptbetriebszustand bewegt wird.

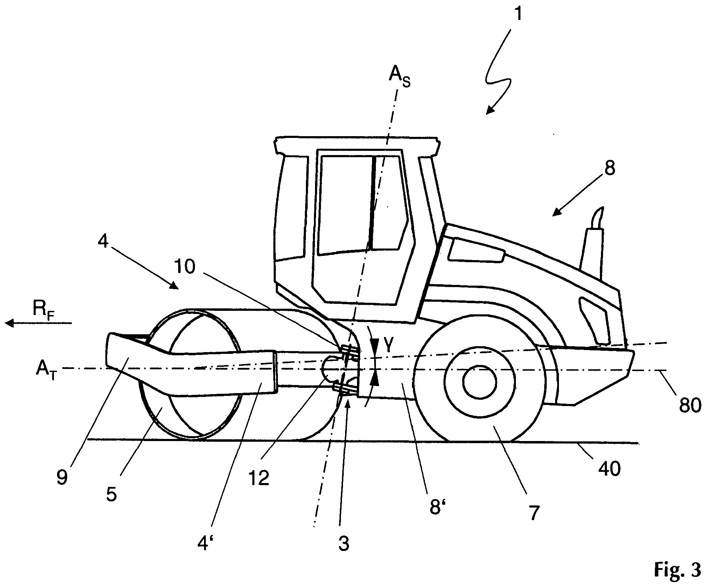

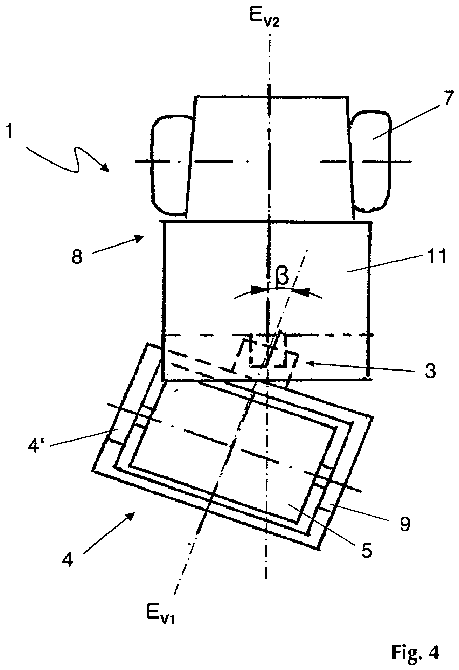

In einer eingelenkten Position, wie sie in Fig. 3 und Fig. 4 bei Vorwärtsfahrt beispielhaft für einen Lenkeinschlag ϕ (Fig. 4) nach rechts in die Zeichenebene dargestellt ist, kann man nun nicht mehr von einer vertikalen Mittenebene E_{V} (Fig. 2) des Walzenzugs 1 sprechen, sondern von einer vertikalen Mittenebene E_{V1}, (Fig. 4) des vorderen Rahmenteils 4 und einer vertikalen Mittenebene E_{V2} (Fig. 4) des hinteren Rahmenteils 8. Ferner verlässt die Pendelachse bei einem Lenkeinschlag ihre zur Bodenoberfläche 40 parallele Ausrichtung. Sie bleibt dabei aber innerhalb der vertikalen Mittenebene E_{V1} des vorderen Rahmenteils 4.

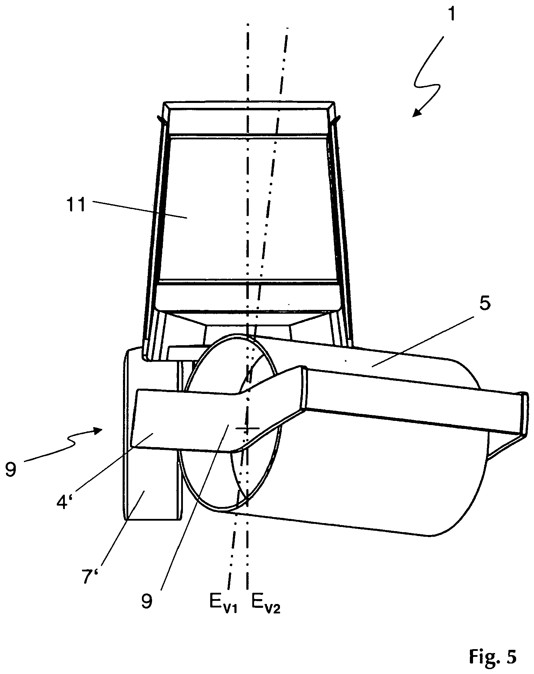

Zwar kommt es dadurch zu einem Kippmoment auf das vordere Rahmenteil 4 und den vorderen Radträger 4' der Bandage 5. Durch einen Ausgleich im Pendelgelenk 12 wird aber verhindert, dass sich dadurch der im äußeren Kurvenbereich liegende Teil 9 des vorderen Rahmenteils 4 anhebt, wie es in Fig. 5 als theoretischer Zustand beispielhaft für einen Lenkeinschlag nach links veranschaulicht ist. Da die Bandage 5 aber anders als in Fig. 5 dargestellt auf dem Boden aufliegt, erfolgt der Pendelausgleich und die Pendelachse A_{T} wird beim Lenkvorgang um einen sich mit dem Lenkwinkel β verändernden Winkel γ (Fig. 3) ausgelenkt. Je größer der Lenkwinkel β ist, desto größer wird γ. γ ist der Winkel, der von der Pendelachse A_{T} und einer zur Bodenoberfläche 40 gedachten parallelen Ebene 80 oder Geraden gebildet wird. Beim Geradeauslauf ist dieser Winkel theoretische 0°, sofern nicht konstruktiv ein anderer Winkel für den Geradeauslauf gewählt wird.

Tatsächlich kommt es durch das Kippmoment, welches auf die Rahmenteile 4, 8 wirkt, zu einer Schwerpunktverschiebung und so zu einer Stabilitätserhöhung des Walzenzugs 1. Außerdem wird das kurvenäußere Hinterrad 7' entlastet und die Lastverteilung auf die Hinterräder 7 wird gleichmäßiger. Auf Grund der geometrischen Anordnung der beiden Rahmenteile 4, 8 kommt es darüber hinaus zu einem verbesserten Geradeauslaufverhalten, da beim Einlenken aufgrund der geneigten Lenkachse A_{S} des Walzenzugs 1 versucht, wieder einen Geradeauslauf einzunehmen. Das ist insbesondere bei unbeabsichtigtem Einlenken von Vorteil. Ferner wird der Pendelwinkel mit wachsendem Lenkwinkel nach oben beschränkt, was die Kollisionsgefahr zwischen dem vorderen und hinteren Rahmenteil 4, 8 der Vibrationswalze 1 verringert.

Die Ausführungsformen gemäß Fig. 6 bis 11 veranschaulichen jeweils Einzelheiten der Gelenkanordnung 3, die eine Torsionsbewegung des vorderen und des hinteren Rahmenteils 4, 8 relativ zueinander um die Pendelachse A_{T} und eine Schwenkbewegung um die Lenkachse A_{S} erlaubt, so dass sie als ein Knick-Pendelgelenk wirkt. Jede Ausführungsform ist mit einem vorderen Anschlusselement 2 und einem hinteren Anschlusselement 6 dargestellt, über welche die betreffende Gelenkanordnung 3 mit dem vorderen bzw. hinteren Rahmenteil 4, 8 verbunden ist. Die Anschlusselemente 2, 6 sind bevorzugt als Flansch ausgebildet. Es versteht sich, dass die Gelenkanordnung 3 jeweils alternativ auch unmittelbar am vorderen und hinteren Rahmenteil 4, 8 angeordnet sein kann, indem das rahmenseitige Gelenkteil des Pendelgelenks 12 und die rahmenseitigen Teile des Knickgelenks 10 integral mit dem vorderen bzw. hinteren Rahmenteil 4, 8 ausgebildet sind. Gemeinsam ist allen Ausführungsformen die nach hinten geneigte Lenkachse A_{S} in Wirkverbindung mit der Pendelachse A_{T}, die bei Geradeausfahrt horizontal bzw. in Längsrichtung des Walzenzugs 1 ausgerichtet ist.

Bei den Ausführungen der Gelenkanordnung 3 sind gleiche Teile mit gleichen Bezugszeichen versehen.

Bei der in Fig. 6 dargestellten ersten Ausführungsform der Gelenkanordnung 3 ist das Pendelgelenk 12 als Drehkörper 14 ausgebildet, der um die Pendelachse A_{T} drehbar am vorderen Anschlusselement 2 angeordnet ist. Das Knickgelenk 10 wird einerseits von zwei diametral abstehenden Gelenkzapfen 20, 20' auf dem Drehkörper 14 und anderseits von zwei Lageraugen 28, 28' gebildet, die an zwei parallelen Jochschenkeln 15, 17 am hinteren Anschlusselement 6 angeordnet sind. Die Rotationsachsen der Gelenkzapfen 20, 20' und der zugehörigen Lageraugen 28, 28' verlaufen koaxial zu der nach hinten geneigten Lenkachse A_{S}. Die beiden Jochschenkel 15, 17 sind über das hintere Anschlusselement 6 miteinander verbunden.

Bei dem in Fig. 6 dargestellten Beispiel sind die beiden Jochschenkel 15, 17 orthogonal zur Lenkachse A_{S} und den Rotationsachsen der Gelenkzapfen 20, 20' angeordnet, wobei sie unter einem Winkel ß vom hinteren Anschlusselement 6 nach oben geneigt abstehen. Sie weisen plane Lagerflächen 19, 19' auf, auf welchen Lagergegenstücke 21, 21' an den Enden der Gelenkzapfen 20, 20' mit entsprechenden Lagerflächen passgenau positioniert werden können. Insofern ergibt sich hier insbesondere eine Ambossform, bei welcher die Lagergegenstücke 21, 21' die auf die Gelenkzapfen 20, 20' wirkenden axialen Kräfte auf die Jochschenkel 15, 17 übertragen.

Erfindungsgemäß ergibt sich der Winkel α' der zur Vertikalen geneigten Anordnung der Jochschenkel 15, 17 durch die Neigung der Lenkachse A_{S} um den Winkel α zur Pendelachse A_{T}.

Bei der in Fig. 7 dargestellten zweiten Ausführungsform ist am vorderen Anschlusselement 2 eine Torsionszapfenaufnahme 27 angeordnet, in welchem ein Torsionszapfen (nicht dargestellt) eines Torsionslagerelements 22 gehalten ist. Auf diese Weise wird das Pendelgelenk 12 gebildet, das eine Torsion der beiden Anschlusselemente 2, 6 relativ zueinander um die Pendelachse A_{T} erlaubt. Am Torsionslagerelement 22 ist bei dieser Ausführungsform eine zylindrische Schrägbohrung 23 vorgesehen, die das Torsionslagerelement 22 vollständig und um den Winkel α zur Pendelachse A_{T} geneigt durchdringt. In dieser Bohrung 23 ist ein Lagerschaft 24 aufgenommen, so dass seine beiden Enden diametral vom Torsionslagerelement 22 abstehen. Die beiden Enden sind über Kugelgelenke mit den Jochschenkeln 15', 17' verbunden. Der Lagerschaft 24 ist dazu an seinen beiden freien Enden mit Lagerelementen 26, 26' versehen, die als Kugelköpfe 30, 30' ausgebildet sind.

Die Jochschenkel 15', 17' sind orthogonal zum hinteren Anschlusselement 6 ausgerichtet. An ihnen sind ein oberes Lagerelement 16 und ein unteres Lagerelement 18 ausgebildet, die Kugelkopfaufnahmen 32, 32' aufweisen. In den Kugelkopfaufnahmen 32, 32' sind die Kugelköpfe 30, 30' gelagert. Bedingt durch die nach hinten geneigte Ausrichtung der Lenkachse A_{S} ist der untere Jochschenkel 15' länger als der obere Jochschenkel 17', und der Abstand des unteren Lagerelements 18 vom hinteren Anschlusselement 6 ist größer, als der Abstand des oberen Lagerelements 16 vom hinteren Anschlusselement 6.

Über das so gebildete Knickgelenk können sowohl Torsionslasten in das Pendelgelenk 12 eingeleitet als auch Schwenkbewegungen zwischen dem vorderen und dem hinteren Anschlusselement 2, 6 übertragen werden.

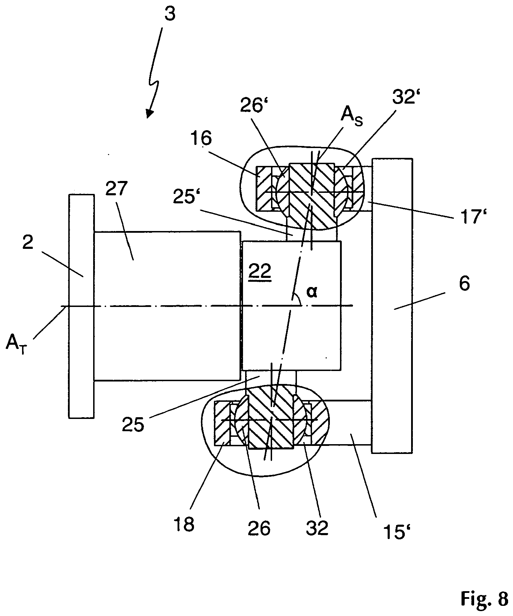

Die in Fig. 8 dargestellte dritte Ausführungsform unterscheidet sich von der zweiten Ausführungsform gemäß Fig. 7 dadurch, dass zwei Lagerschäfte 25, 25' diametral auf dem Torsionslagerelement 22 angeordnet und genau radial ausgerichtet. Bei dieser Ausführungsform ist dabei der Lagerschaft 25, der das untere Lagerelement 18 trägt, in Richtung der Pendelachse A_{T} nach vorne versetzt, während der Lagerschaft 25', der das obere Lagerelement 16 trägt, nach hinten versetzt ist. Entsprechend ist der untere Jochschenkel 15' länger als der obere Jochschenkel 17'. Aus dem Versatz der beiden Lagerschäfte 25, 25' auf der Pendelachse A_{T} und dem entsprechenden Versatz der auf den jeweiligen Jochschenkeln 15', 17' angeordneten Lagerelementen 16, 18 sowie dem Abstand der beiden Jochschenkel 15', 17' voneinander resultiert die Neigung α der Lenkachse A_{S}.

Die Jochschenkel 15', 17' bzw. die Lagerelemente 16, 18 sind bei dieser Ausführungsform in Bezug auf eine Achse senkrecht zur Pendelachse A_{T} in Richtung der Pendelachse A_{T} versetzt angeordnet. Insbesondere ist der untere Jochschenkel 15' etwas länger ausgeführt als der obere Jochschenkel 17', sodass die Lagerelemente 16, 18 auf einer zur Vertikalen geneigten Achse, in diesem Fall um eine Achse parallel und koaxial zur Lenkachse A_{S}, gelagert sind.

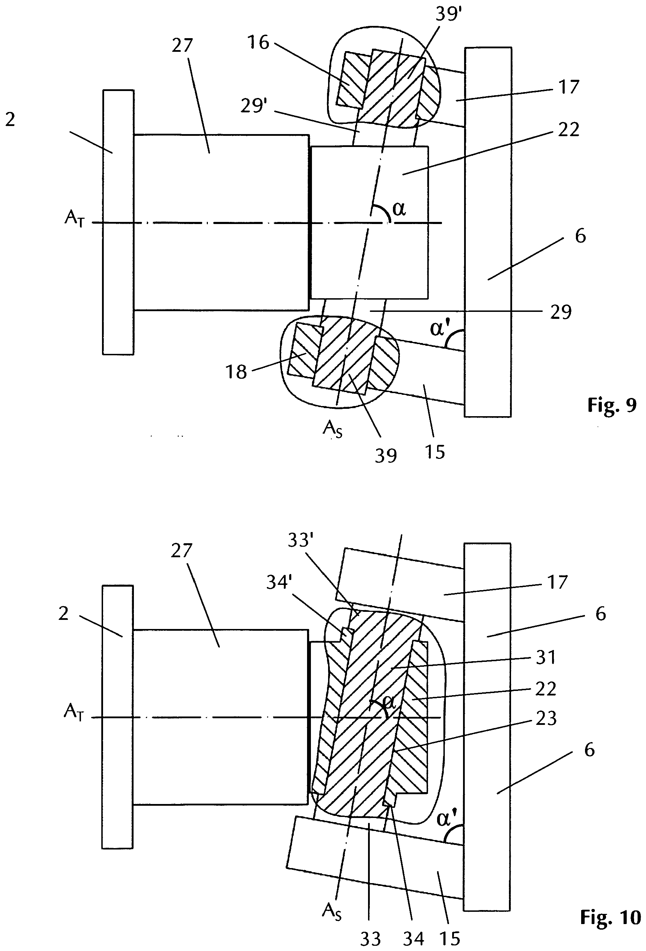

Bei dem vierten Ausführungsbeispiel der Gelenkanordnung 3 gemäß Fig. 9 bilden zwei Lagerschäfte 29, 29' ein Wellenstummelpaar. Sie sind auf das Torsionslagerelement 22 aufgesetzt und entsprechend dem ersten und zweiten Ausführungsbeispiel von Fig. 6 bzw. Fig. 7 unter dem Winkel α nach hinten geneigt. Entsprechend sind die beiden parallelen Jochschenkel 15, 17 unterschiedlicher Länge wie beim ersten Ausführungsbeispiel um einen Winkel α' nach oben geneigt, so dass die um den Winkel α nach hinten geneigte Lenkachse A_{S} gebildet wird. Die freien Enden der Lagerschäfte 29, 29' sind als zylindrische Zapfen 39, 39' ausgebildet, die in entsprechenden Lageraugen 28, 28' in den Jochschenkeln 15, 17 axial verschiebefest gelagert sind.

Das fünfte Ausführungsbeispiel gemäß Fig. 10 weist wie das dritte Ausführungsbeispiel gemäß Fig. 8 ein Torsionslagerelement 22 mit einer durchgehenden zylindrischen Bohrung 23 auf, die unter dem Winkel α nach hinten geneigt ist und damit die Neigung der Lenkachse A_{S} bestimmt. Durch die Bohrung 23 ist ein Bolzen 31 geführt, dessen freie Enden jeweils mit einem Kragen 33, 33' versehen sind. Mit den beiden Krägen 33, 33' stützt sich der Bolzen 31 in axialer Richtung an Ring-Lagerflächen 34, 34' auf dem Torsionslagerelement 22 ab, welche koaxial zum Bolzen 31 ausgebildet sind.

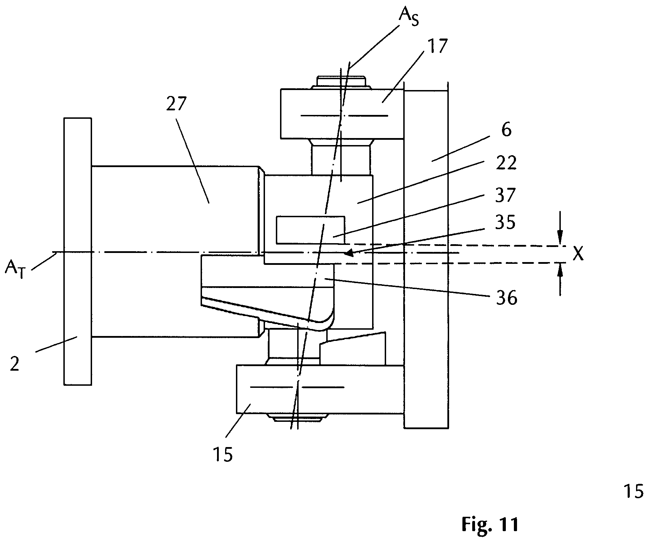

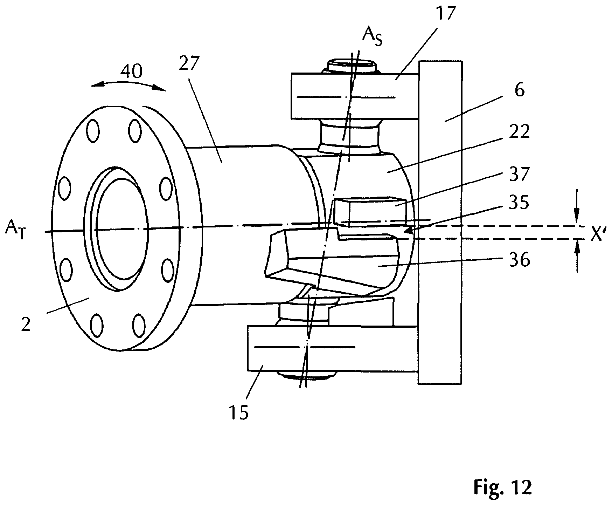

Das in Fig. 11 und 12 veranschaulichte sechste Ausführungsbeispiel der Gelenkanordnung 3 weist einen Pendelanschlag 35, bestehend aus einem Finger 36 und einem Anschlag 37, zur Begrenzung des Pendelwinkels nach oben in Abhängigkeit von der Neigung α der Lenkachse A_{S} und des Lenkwinkels β auf. Demnach wird der Pendelwinkel im Gegenuhrzeigersinn gemäß Doppelpfeil 40 beim Lenken nach links mit zunehmendem Lenkwinkel β kleiner. Beim Lenken nach rechts wird der Pendelwinkel im Uhrzeigersinn gemäß Doppelpfeil 40 mit zunehmendem Lenkwinkel β kleiner. Im Übrigen entspricht die Gelenkanordnung 3 der Ausführung gemäß Fig. 8. Fig. 11 zeigt die Gelenkanordnung 3 und den Pendelanschlag 35 bei einer Geradeausfahrt der Vibrationswalze 1 bei einem bevorzugten Pendelwinkel von ±12°. In Fig. 12 ist die Gelenkanordnung 3 mit dem Pendelanschlag 35 im eingelenkten Zustand bei einem bevorzugten maximalen Pendelwinkel von ±6° dargestellt.

Fig. 11 und 12 verdeutlichen die Reduzierung des Pendelwinkels im Gegenuhrzeigersinn beim Einlenken nach links. Das in Fig. 11 dargestellte Maß X stellt den Pendelwinkel bei Geradeausfahrt dar. Fig. 12 stellt den nach links eingelenkten Zustand der Vibrationswalze 1 auf der Ebene, also der Bodenoberfläche 40, dar. Dabei stellt X' das kleiner gewordene Maß des Restpendelwinkels dar.

Die Reduzierung des Pendelwinkels im Uhrzeigersinn beim Lenken nach rechts erfolgt durch einen spiegelbildlich auf der rechten Seite der Gelenkanordnung 3 angeordneten Pendelanschlag gleicher Ausführung, der in der Ansicht von Fig. 11 und 12 vom der Torsionszapfenaufnahme 27 und vom Torsionslagerelement 22 verdeckt ist.

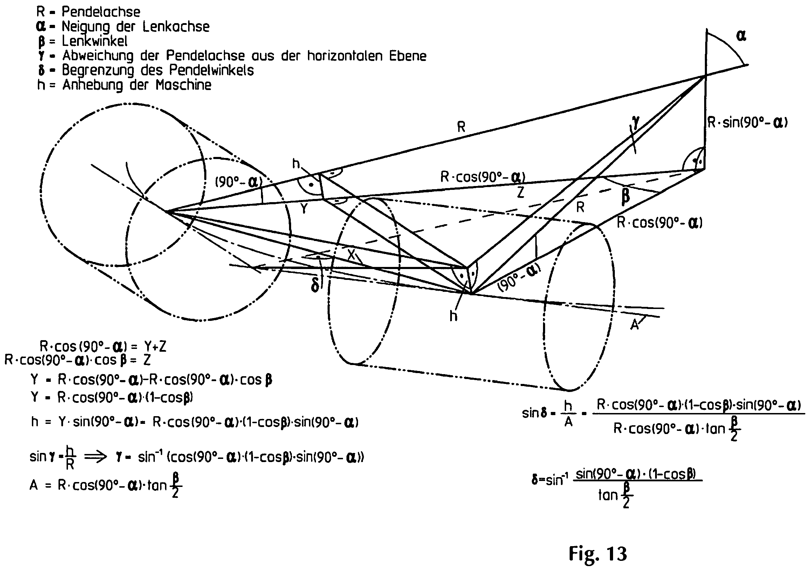

Durch die Verringerung des Pendelwinkels bei zunehmendem Lenkwinkel β und durch Anheben des Walzenzugs 1 im Bereich der Knickgelenkanordnung 3 um die Höhe h gemäß Fig. 13 kann der erforderliche Freiraum zwischen dem vorderen und hinteren Rahmenteil 4, 8, insbesondere des vorderen Rahmenteils 4 und der Fahrerkabine 11 (Fig. 1), verringert werden.

In der dreidimensionalen geometrischen Darstellung von relevanten Größen der Gelenkanordnung 3 gemäß Fig. 13 wird insbesondere die Abhängigkeit des Begrenzungswinkels δ um die Pendelachse A_{T} vom Neigungswinkel α der Lenkachse A_{S} und dem Lenkwinkel β ersichtlich.

## Patentansprüche

1. Walzenzug (1) mit einer kombinierten Pendel-/ Knickgelenkanordnung (3) mit
einem vorderen Anschlusselement (2), zum Anschluss eines vorderen Rahmenteils (4) des Walzenzuges,
einem hinteren Anschlusselement (6), zum Anschluss eines hinteren Rahmenteils (8) des Walzenzuges, wobei sich auf dem hinteren Rahmenteil (8) eine Fahrerkabine (11) befindet, und wobei am vorderen Rahmenteil (4) und am hinteren Rahmenteil (8) jeweils Fahrmittel angeordnet sind,
einem Knickgelenk (10), über das das vordere Rahmenteil (4) und das hintere Rahmenteil (8) relativ zueinander um eine Lenkachse (A_{S}) verschwenkbar miteinander verbunden sind, und einem Pendelgelenk (12), über das das vordere Rahmenteil (4) und das hintere Rahmenteil (8) relativ zueinander um eine Pendelachse (A_{T}) tordierbar miteinander verbunden sind, wobei die Gelenkanordnung (3) eine Kombination des Pendelgelenks (15) und des Knickgelenks (10) aufweist, wobei ferner das Pendelgelenk (12) das vordere Anschlusselement (2) und das Knickgelenk (10) das hintere Anschlusselement (6) aufweisen, und das Pendelgelenk (12) einen Drehkörper (14) oder ein Torsionslagerelement (22) aufweist, der bzw. das um die Pendelachse (A_{T}) drehbar am vorderen Anschlusselement (2) angeordnet ist, und wobei ferner das zum rahmenseitigen Gelenkteil des Knickgelenks (10) komplementäre Gelenkteil des Knickelements (10) am Drehkörper (14) bzw. am Torsionslagerelement (22) angeordnet ist,
**dadurch gekennzeichnet,**
**dass** die Lenkachse (A_{S}) des Knickgelenkes (10) um einen Winkel (α) zur Pendelachse (A_{T}) geneigt ist, und dass ein Pendelanschlag (35) des Pendelwinkels in Abhängigkeit von der Neigung der Lenkachse (A_{S}) und des Lenkwinkels (β) vorhanden ist.

2. Walzenzug (1) nach Anspruch 1,
**dadurch gekennzeichnet,**
**dass** der Pendelanschlag (35) der Gelenkanordnung (3) durch einen Finger (36) am vorderen Rahmenteil (4) und einen Anschlag (37) für den Finger (36) auf dem Drehkörper (14) bzw. dem Torsionslagerelement (22) gebildet wird.

3. Walzenzug (1) nach Anspruch 1 oder 2,
**dadurch gekennzeichnet,**
**dass** der Winkel α zwischen 85° und 65°, insbesondere 80° beträgt.

4. Walzenzug (1) nach einem der vorhergehenden Ansprüche,
**dadurch gekennzeichnet,**
**dass** die Lenkachse (A_{S}) der Gelenkanordnung (3) in Richtung des hinteren Rahmenteils (8) geneigt ist.

5. Walzenzug (1) nach einem der vorhergehenden Ansprüche,
**dadurch gekennzeichnet,**
**dass** das hintere Rahmenteil (8) ein Jochelement (15, 15'; 17, 17') mit wenigstens zwei voneinander beabstandeten Lagerelementen (16, 18) aufweist, und
**dass** dasvordere Rahmenteil (4) mindestens einen Lagerschaft (24, 25, 29) und zwei dazu komplementäre Lagerelemente (26, 26') aufweist, die mit den Lagerelementen (16, 18) in kraftschlüssiger Wirkverbindung stehen.

6. Walzenzug (1) nach Anspruch 5,
**dadurch gekennzeichnet,**
**dass** wenigstens ein Lagerelement (26, 26') der Gelenkanordnung (3) einen Kugelkopf (30, 30') und das Lagerelement (16, 18) eine komplementäre Kugelkopfaufnahme (32, 32') aufweisen.

7. Walzenzug (1) nach einem der Ansprüche 5 oder 6,
**dadurch gekennzeichnet,**
**dass** der Lagerschaft (24) parallel zur Lenkachse (A_{S}) geneigt ausgebildet ist.

8. Walzenzug (1) nach einem der Ansprüche 5 bis 7,
**dadurch gekennzeichnet,**
**dass** die Gelenkanordnung (3) wenigstens zwei Lagerschäfte (24; 25, 25'; 29; 29') umfasst, die sich senkrecht zur Pendelachse (A_{T}) erstrecken und die in Bezug auf eine Achse senkrecht zur Pendelachse (A_{T}) entlang der Pendelachse (A_{T}) versetzt zueinander angeordnet sind.

9. Walzenzug (1) nach einem der Ansprüche 5 bis 8,
**dadurch gekennzeichnet,**
**dass** die Lagerelemente (16, 18) des Jochelementes (15, 15'; 17, 17') als ein oberes Lagerelement (16) und ein unteres Lagerelement (18) ausgebildet sind, und wobei das untere Lagerelement (18) in Bezug auf eine Achse senkrecht zur Pendelachse (A_{T}) entlang der Pendelachse (A_{T}) versetzt zum oberen Lagerelement (16) angeordnet ist, oder umgekehrt.

10. Walzenzug (1) nach einem der Ansprüche 5 bis 9,
**dadurch gekennzeichnet,**
**dass** der wenigstens eine Lagerschaft (24, 25, 29) an einem Torsionslagerelement (22) angeordnet ist, das mit einem Gelenkzapfen (20, 20') oder dergleichen Bauteil rotierbar in eine Torsionszapfenaufnahme (27) eingreift, oder umgekehrt.

## Claims

1. Roller (1) with a combined pendulum- / pivot-joint arrangement (3), comprising
a front connection element (2) for connecting a front frame part (4) of the roller, a rear connection element (6) for connecting a rear frame part (8) of the roller, a driver's cabin (11) being located on the rear frame part (8) and driving means being arranged on both the front frame part (4) and on the rear frame part (8),
a pivot joint (10), via which the front frame part (4) and the rear frame part (8) are connected with one another in a pivotable manner in relation to one another about a steering axis (As), and a pendulum joint (12), via which the front frame part (4) and the rear frame part (8) are connected with one another in a twistable manner in relation to one another about a pendulum axis (A_{T}), wherein the joint arrangement (3) comprises a combination of the pendulum joint (15) and the pivot joint (10), wherein further the pendulum joint (12) comprises the front connection element (2) and the pivot joint (10) comprises the rear connection element (6), and the pendulum joint (12) comprises a rotary body (14) or a torsional bearing element (22) which is rotatably arranged on the front connection element (2) about the pendulum axis (A_{T}), and wherein further the joint part of the pivot element (10) complementary to the joint part of the pivot joint (10) on the frame side is arranged on the rotary body (14) or on the torsional bearing element (22),
**characterized in that**
the steering axis (A_{S}) of the pivot joint (10) is inclined about an angle (α) in relation to the pendulum axis (A_{T}) and a pendulum stop (35) of the pendulum angle is provided depending on the inclination of the steering axis (A_{S}) and the steering angle (β).

2. Roller (1) according to claim 1,
**characterized in that**
the pendulum stop (35) of the joint arrangement (3) is formed by a finger (36) on the front frame part (4) and a stop (37) for the finger (36) on the rotary body (14) or torsional bearing element (22).

3. Roller (1) according to claim 1 or 2,
**characterized in that**
the angle α is between 85° and 65°, in particular 80°.

4. Roller (1) according to any one of the preceding claims,
**characterized in that**
the steering axis (A_{S}) is inclined in the direction of the rear frame part (8).

5. Roller (1) according to any one of the preceding claims,
**characterized in that**
the rear frame part (8) comprises a yoke element (15, 15'; 17, 17') with at least two bearing elements (16, 18) spaced apart from one another, and
the front frame part (4) comprises at least one bearing shaft (24, 25, 29) and two bearing elements (26, 26') complementary thereto, the latter being connected in an operative, force-locked manner to the bearing elements (16, 18).

6. Roller (1) according to claim 5,
**characterized in that**
at least one bearing element (26, 26') of the joint arrangement (3) comprises a spherical head (30, 30') and the bearing element (16, 18) comprises a complementary spherical head receptacle (32, 32').

7. Roller (1) according to claims 5 or 6,
**characterized in that**
the bearing shaft (24) is configured in an inclined manner parallel to the steering axis (A_{S}).

8. Roller (1) according to any one of claims 5 to 7,
**characterized in that**
the joint arrangement (3) comprises at least two bearing shafts (24; 25, 25'; 29; 29'), which extend perpendicularly to the pendulum axis (A_{T}) and which are arranged with respect to an axis perpendicular to the pendulum axis (A_{T}) in an offset manner with respect to each other along the pendulum axis (A_{T}).

9. Roller (1) according to any one of claims 5 to 8,
**characterized in that**
the bearing elements (16, 18) of the yoke element (15, 15'; 17, 17') are configured as an upper bearing element (16) and a bottom bearing element (18), the bottom bearing element (18) being arranged with respect to an axis perpendicular to the pendulum axis (A_{T}) in an offset manner with respect to the upper bearing element (16) along the pendulum axis (A_{T}) or vice versa.

10. Roller (1) according to any one of claims 5 to 9,
**characterized in that**
the at least one bearing shaft (24, 25, 29) is arranged on a torsional bearing element (22) which engages, together with a joint pin (20, 20') or a similar component, in a rotatable manner with a torsional pin receptacle (27) or vice versa.

## Revendications

1. Rouleau compacteur (1) avec un système d'articulation pivot/pendule combiné (3), comprenant
un élément de liaison avant (2) pour le raccordement d'une partie de châssis avant (4) du rouleau compacteur,
un élément de liaison arrière (6) pour le raccordement d'une partie de châssis arrière (8) du rouleau compacteur, une cabine conducteur (11) étant située sur la partie de châssis arrière (8) et des moyens d'entraînement étant disposés à la fois sur la partie de châssis avant (4) et sur la partie de châssis arrière (8),
une articulation à pivot (10), au moyen de laquelle la partie de châssis avant (4) et la partie de châssis arrière (8) sont raccordées l'une à l'autre de manière pivotante autour d'un axe de direction (A_{S}), et une articulation pendulaire (12), au moyen de laquelle la partie de châssis avant (4) et la partie de châssis arrière (8) sont raccordées l'une à l'autre de manière oscillante autour d'un axe d'oscillation (A_{T}), dans lequel le système d'articulation (3) comprend une combinaison de l'articulation pendulaire (12) et de l'articulation à pivot (10), dans lequel en outre l'articulation pendulaire (12) comprend l'élément de liaison avant (2) et l'articulation à pivot (10) comprend l'élément de liaison arrière (6), et l'articulation pendulaire (12) comprend un corps rotatif (14) ou un élément de palier de torsion (22) qui est monté rotatif sur l'élément de liaison avant (2) autour de l'axe d'oscillation (A_{T}), et dans lequel en outre la partie articulation de l'élément de pivot (10) complémentaire de la partie articulation de l'articulation à pivot (10) sur le côté châssis est disposée sur le corps rotatif (14) ou sur l'élément de palier de torsion (22),
**caractérisé en ce que**
l'axe de direction (A_{S}) de l'articulation à pivot (10) est incliné d'un angle (α) par rapport à l'axe pendulaire (A_{T}), et une butée pendulaire (35) de l'angle pendulaire est présente en relation avec l'inclinaison de l'axe de direction (A_{S}) et de l'angle de direction (β).

2. Rouleau compacteur (1) selon la revendication 1,
**caractérisé en ce que**
la butée pendulaire (35) du système d'articulation (3) est formée par un doigt (36) situé sur la partie de châssis avant (4) et par une butée (37) pour le doigt (36) sur le corps rotatif (14) ou l'élément de palier de torsion (22).

3. Rouleau compacteur (1) selon la revendication 1 ou 2,
**caractérisé en ce que**
l'angle α est compris entre 85° et 65°, et en particulier est de 80°.

4. Rouleau compacteur (1) selon l'une quelconque des revendications précédentes,
**caractérisé en ce que**
l'axe de direction (A_{S}) est incliné en direction de la partie de châssis arrière (8).

5. Rouleau compacteur (1) selon l'une quelconque des revendications précédentes,
**caractérisé en ce que**
la partie de châssis arrière (8) comprend un élément d'étrier (15, 15' ; 17, 17') avec au moins deux éléments de palier (16, 18) à distance l'un de l'autre, et
la partie de châssis avant (4) comprend au moins un arbre de support (24, 25, 29) et deux éléments de palier (26, 26') complémentaires de celui-ci, ces derniers étant raccordés de manière opérationnelle, bloqués en force, aux éléments de palier (16, 18).

6. Rouleau compacteur (1) selon la revendication 5,
**caractérisé en ce que**
au moins un élément de palier (26, 26') du système d'articulation (3) comprend une tête sphérique (30, 30') et l'élément de palier (16, 18) comprend un logement (32, 32') complémentaire de la tête sphérique.

7. Rouleau compacteur (1) selon les revendications 5 ou 6,
**caractérisé en ce que**
l'arbre de support (24) est configuré d'une manière inclinée parallèlement à l'axe de direction (A_{S}).

8. Rouleau compacteur (1) selon l'une quelconque des revendications 5 à 7,
**caractérisé en ce que**
le système d'articulation (3) comprend au moins deux arbres de support (24 ; 25, 25' ; 29 ; 29') qui s'étendent perpendiculairement à l'axe pendulaire (A_{T}) et qui sont disposés, par rapport à un axe perpendiculaire à l'axe pendulaire (A_{T}), de manière décalée l'un par rapport à l'autre le long de l'axe pendulaire (A_{T}).

9. Rouleau compacteur (1) selon l'une quelconque des revendications 5 à 8,
**caractérisé en ce que**
les éléments de palier (16, 18) de l'élément d'étrier (15, 15' ; 17, 17') sont configurés en un élément de palier supérieur (16) et un élément de palier inférieur (18), l'élément de palier inférieur (18) étant disposé, par rapport à un axe perpendiculaire à l'axe pendulaire (A_{T}), de manière décalée par rapport à l'élément de palier supérieur (16) le long de l'axe pendulaire (A_{T}), ou vice versa.

10. Rouleau compacteur (1) selon l'une quelconque des revendications 5 à 9,
**caractérisé en ce que**
au moins un arbre de support (24, 25, 29) est disposé sur l'élément de palier de torsion (22) qui s'engage, conjointement avec une tige d'articulation (20, 20') ou un élément similaire, de manière rotative avec un logement de tige de torsion (27), ou vice versa.
